# EUROPÄISCHE PATENTSCHRIFT

(11) **EP 3 519 236 B1**
(45) Veröffentlichungstag und Bekanntmachung des Hinweises auf die Patenterteilung: **01.12.2021**
(21) Anmeldenummer: 17772363.2
(22) Anmeldetag: 19.09.2017
(51) Int. Cl.: B60K 37/06

(54) **ANORDNUNG, FORTBEWEGUNGSMITTEL UND VERFAHREN ZUR UNTERSTÜTZUNG EINES ANWENDERS EINES FORTBEWEGUNGSMITTELS**
ASSEMBLY, MEANS OF TRANSPORTATION AND METHOD FOR ASSISTING A USER OF A MEANS OF TRANSPORTATION
SYSTÈME, MOYEN DE LOCOMOTION ET PROCÉDÉ POUR ASSISTER UN UTILISATEUR D'UN MOYEN DE LOCOMOTION

(30) Priorität: 28.09.2016 DE 102016218694
(43) Veröffentlichungstag der Anmeldung: 07.08.2019
(73) Patentinhaber: Volkswagen Aktiengesellschaft, 38440 Wolfsburg (DE)
(72) Erfinder: TRABUCCO, Luigi, 38442 Wolfsburg (DE)
(86) Internationale Anmeldenummer: PCT/EP2017/073618
(87) Internationale Veröffentlichungsnummer: WO 2018/060007

(56) Entgegenhaltungen:
- EP-A1- 3 484 738
- WO-A1-2012/156029
- WO-A1-2015/079676
- US-B1- 7 826 934

## Beschreibung

### Stand der Technik

Die vorliegende Erfindung betrifft eine Anordnung, ein Fortbewegungsmittel sowie ein Verfahren zur Unterstützung eines Anwenders eines Fortbewegungsmittels. Insbesondere betrifft die vorliegende Erfindung eine Ergonomieverbesserung bei der Bedienung von Schaltflächen und sonstigen Bedienelementen in einem Fortbewegungsmittel.

WO 2015/079676 A1 und WO 2012/156029 A1 offenbaren Verfahren zur geschwindigkeitsabhängigen Freigabe von Anzeigeinhalten in einem Fortbewegungsmittel. Sofern eine vorbestimmte Geschwindigkeit überschritten wird, wird die Anzeige von Informationen auf einem mobilen tragbaren Anwenderendgerät unterbunden; wird die Geschwindigkeit reduziert, wird die Anzeige wieder freigegeben.

US 7,826,934 B1 offenbart ein Fahrzeuginterieur, bei welchem Komponenten desselben in einem verhüllten Modus dem Blick eines Betrachters entzogen werden. In einem Arbeitsmodus wird der Blick auf die Komponenten wieder freigegeben.

Das nicht vorveröffentliches Dokument EP3484738 A wurde ebenfalls berücksichtigt.

Üblicherweise sind die Bedieneinrichtungen, mittels welcher beispielsweise die Heiz-/ Klimaanlage, Türverriegelung, etc. angesteuert werden können, in Hardware realisiert. Hierdurch ist die Position des Bedienelementes dauerhaft festgelegt. Zwar werden moderne Fortbewegungsmittel mit immer mehr Bildschirmfläche versehen, auf welcher in Software ausgestaltete Bedienelemente für Funktionsaufrufe angezeigt werden können. Jedoch bleiben die im Stand der Technik bekannten Verfahren hinter den technischen Möglichkeiten zurück. Es ist eine Aufgabe der vorliegenden Erfindung, das vorstehend identifizierte Potential zu nutzen.

### Offenbarung der Erfindung

Die vorstehend identifizierte Aufgabe wird erfindungsgemäß durch ein Verfahren gemäß Anspruch 1 zur

Unterstützung eines Anwenders eines Fortbewegungsmittels gelöst. Der Anwender kann beispielsweise der Führer, insbesondere der Fahrer/Pilot, des Fortbewegungsmittels sein. Entsprechend kann das Fortbewegungsmittel als Pkw, Transporter, LKW, Luft- und/oder Wasserfahrzeug ausgestaltet sein. Zunächst wird eine Veränderung eines Betriebszustandes des Fortbewegungsmittels ermittelt. Dies kann beispielsweise der Wechsel von einem stehenden Zustand in einen fahrenden Zustand, der Wechsel von einem manuellen Führen zu einem hoch automatisierten Fahren, das Öffnen einer Tür des Fortbewegungsmittels o. ä. sein. Da sich hierdurch ergonomische Umstände für den Anwender des Fortbewegungsmittels ändern können, wird erfindungsgemäß im Ansprechen auf die Veränderung des Betriebszustandes eine Position einer Schaltfläche zur Bedienung einer Funktion des Fortbewegungsmittels verändert. Insbesondere wird die Schaltfläche an einen solchen Ort verbracht, an welchem der Anwender sie im neuen Betriebszustand des Fortbewegungsmittels einfacher und ergonomischer erreichen kann. Im Ergebnis erhöht sich die Ergonomie des Fortbewegungsmittels, wodurch ggf. auch seine Verkehrssicherheit erhöht werden kann, da der Anwender weniger ermüdet.

Gemäß einem zweiten Aspekt der vorliegenden Erfindung wird eine Anordnung gemäß Anspruch 2 zur Unterstützung eines Anwenders eines Fortbewegungsmittels vorgeschlagen. Die Anordnung kann als elektronisches Steuergerät ausgestaltet sein. Sie umfasst einen Signaleingang, welcher beispielsweise einen Busteilnehmer und/oder elektrische Kontakte zur Entgegennahme von Signalen repräsentierend eine Veränderung eines Betriebszustandes des Fortbewegungsmittels aufweisen kann. Eine Auswerteeinheit kann einen programmierbaren Prozessor, Mikrocontroller o. ä. umfassen und ist zur Ausführung der erfindungsgemäßen Schritte eingerichtet. Ein Signalausgang ermöglicht die Einflussnahme auf die Position der Schaltfläche. Somit ist die Anordnung eingerichtet, in Verbindung mit der Auswerteeinheit über den Signaleingang eine Veränderung eines Betriebszustandes des Fortbewegungsmittels zu ermitteln. Im Ansprechen darauf ist die Auswerteeinheit eingerichtet, über den Signalausgang eine Position einer Schaltfläche zur Bedienung einer Funktion des Fortbewegungsmittels zu verändern, um die Ergonomie des Fortbewegungsmittels zu verbessern. Hierbei wird die Position der Schaltfläche derart verändert, dass sie im neu hergestellten Betriebszustand des Fortbewegungsmittels für den Anwender besser und ergonomischer zu erreichen ist. Mit anderen Worten ist die Anordnung eingerichtet, ein erfindungsgemäßes Verfahren gemäß dem erstgenannten Erfindungsaspekt auszuführen. Der Signalausgang kann beispielsweise mit einer Grafikkarte o. ä. verbunden sein, sodass die Auswerteeinheit die Anzeige der Schaltfläche an der veränderten Position veranlassen oder selbstständig vornehmen kann.

Unabhängig vom vorgenannten Erfindungsaspekt kann die Position der Schaltfläche von einem Lenkrad in eine Türinnenfläche/Türverkleidung wandern, um beispielsweise in einem hochautomatisierten Fahrbetrieb eine ehemals auf dem nun nicht mehr in ergonomischer Reichweite befindlichen Lenkrad angezeigtes Bedienelement über die auf der Armauflage der Türinnenverkleidung ruhende Hand bedienen zu können. In entsprechender Weise kann die Schaltfläche vom Lenkrad zur Mittelkonsole "wandern", wo der Fahrer sie mit der rechten, der Beifahrer mit der linken Hand ergonomisch einwandfrei betätigen kann. Entsprechend können die Positionen vom Armaturenbrett (z. B. Kombiinstrument und/oder zentrales Informationsdisplay) in die Türverkleidung oder in die Mittelkonsole verlagert werden. Nimmt der Anwender wieder Platz auf dem Fahrersitz, kann dies beispielsweise durch eine Sitzbelegungssensorik erkannt werden und zum Anlass für ein Absenken der Anzeigeposition der Schaltfläche genommen werden. Hierbei kann die Position der Schaltfläche beispielsweise auch innerhalb ein und derselben Anzeigeeinrichtung verändert werden.

Die Unteransprüche zeigen bevorzugte Weiterbildungen.

Die Gestalt der Schaltfläche kann in Abhängigkeit der jeweiligen Anzeigetechnologie, der zur Verfügung stehenden Fläche sowie in Abhängigkeit optischer und ergonomischer Gesichtspunkte modifiziert werden, wenn sie von einer ersten Position an eine zweite Position verlagert wird. Wichtig ist erfindungsgemäß lediglich, dass die Schaltfläche sowohl vor als auch nach dem Verändern ihrer Position ein und dieselbe proprietäre Funktion bedient.

Die durch die Schaltfläche anwählbare Funktion kann beispielsweise eine Einstellung einer Sitzgelegenheit und/oder eines Lenkhandrades ermöglichen. Insbesondere solche Funktionen werden von Anwendern bevorzugt vor dem Besteigen des Fortbewegungsmittels angepasst, um bequem und ergonomisch Platz nehmen zu können. Ihre Bedienung ist jedoch mindestens ebenso wichtig, nachdem der Anwender im Fortbewegungsmittel Platz genommen hat. Für beide Anwenderpositionen sind jedoch unterschiedliche Schaltflächenpositionen ergonomisch.

Dieser Zielkonflikt kann erfindungsgemäß aufgelöst werden. Weitere Beispiele für Funktionen, welche die erfindungsgemäß verschobene Schaltfläche auslösen kann, sind eine Türentriegelung/Türschloss und alternativ oder zusätzlich ein elektrischer Fensterheber. Die vorgenannten Beispiele können vom Fachmann beliebig ergänzt und aktualisiert werden.

Gemäß einem dritten Aspekt der vorliegenden Erfindung wird ein Fortbewegungsmittel vorgeschlagen, welches eine Anzeigeeinrichtung (bevorzugt mit einer berührungsempfindlichen Eingabeoberfläche) und eine Anordnung gemäß dem zweitgenannten Erfindungsaspekt aufweist. Somit verwirklicht auch das Fortbewegungsmittel, welches als Pkw, Transporter, LKW, Luft- und/oder Wasserfahrzeug ausgestaltet sein kann, die Merkmale, Merkmalskombinationen und die sich aus diesen ergebenden Vorteile der erfindungsgemäßen Anordnung, sodass zur Vermeidung von Wiederholungen auf die obigen Ausführungen verwiesen wird.

### Kurze Beschreibung der Zeichnungen

Nachfolgend werden Ausführungsbeispiele der vorliegenden Erfindung unter Bezugnahme auf die beigefügten Zeichnungen beschrieben. Es zeigen:
- Figur 1: ein Ausführungsbeispiel eines erfindungsgemäß ausgestalteten Fortbewegungsmittels in einem ersten Betriebszustand;
- Figur 2: ein Ausführungsbeispiel eines erfindungsgemäß ausgestalteten Fortbewegungsmittels in einem zweiten Betriebszustand;
- Figur 3: eine schematische Darstellung eines Ausführungsbeispiels einer erfindungsgemäßen Anordnung;
- Figur 4: eine Seitenansicht eines erfindungsgemäß verwendbaren Türgriffs in einem ersten Betriebszustand;
- Figur 5: eine Seitenansicht eines erfindungsgemäß verwendbaren Türgriffs in einem zweiten Betriebszustand; und
- Figur 6: ein Flussdiagramm veranschaulichend Schritte eines Ausführungsbeispiels eines erfindungsgemäßen Verfahrens.

### Ausführungsformen der Erfindung

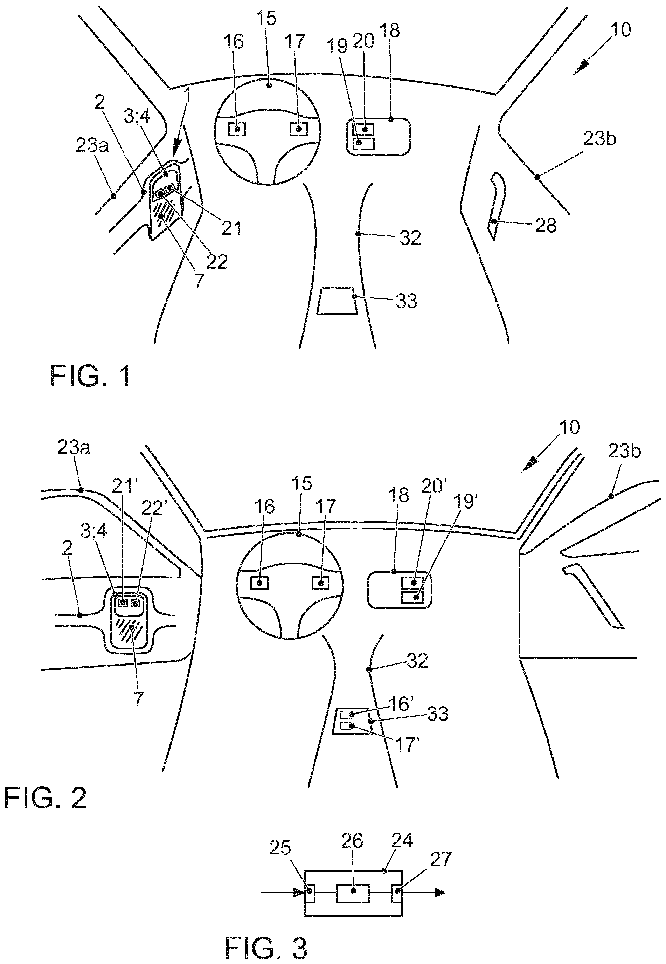

Figur 1 zeigt einen Fahrerarbeitsplatz eines Pkws 10 eines Ausführungsbeispiels eines erfindungsgemäßen Fortbewegungsmittels. Ein Multifunktionslenkrad 15 weist Schaltflächen 16, 17 auf, welche der Anwender mit dem Daumen ergonomisch bedienen kann, sofern er den Fahrerarbeitsplatz für die manuelle Führung des Pkws 10 eingerichtet hat. Ein zentrales Informationsdisplay 18 als Anzeigeeinrichtung weist zwei Schaltflächen 19, 20 auf, welche zur Bedienung einer jeweiligen Funktion des Pkws 10 dienen. Wechselt der Anwender in einen hochautomatisierten Fahrbetrieb, kann er beispielweise seine Sitzposition derart modifizieren, dass er einen größeren Abstand zum Multifunktionslenkrad 15 einnimmt. Hierdurch wird im Falle eines Crashs die Verletzungsgefahr verringert. Jedoch wächst auch der Abstand des Anwenders zu den Schaltflächen 16, 17, 19, 20. Die Fahrertür 23a weist einen Türgriff 1 mit einem Griffstück 2 und einer Anzeigeeinrichtung 3 auf. Die Anzeigeeinrichtung 3 ist mit einer berührungsempfindlichen Bedienoberfläche 4 nach Art eines Touchscreens versehen. Die Anzeigeeinrichtung 3 stellt Schaltflächen 21, 22 in räumlicher Nähe zu einem unterhalb angeordneten Lautsprechergitter 7 dar. Im Vergleich hierzu weist die Beifahrertür 23b einen herkömmlichen Türgriff 28 auf. Ein in der Mittelkonsole 32 angeordneter Touchscreen 33 zeigt bei geschlossenen Türen keine Schaltflächen an.

Figur 2 zeigt den in Figur 1 dargestellten Fahrerarbeitsplatz nach dem Öffnen der Türen 23a, 23b. Um die Bedienbarkeit der Schaltflächen 19, 20 (siehe Figur 1) für den Anwender (Beifahrer) aus einer neben dem Pkw 10 stehenden Position zu verbessern, sind die Schaltflächen 19', 20' nun rechts auf der Anzeigeeinrichtung 18 dargestellt. Auf diese Weise ist ihr Abstand von der Beifahrertür 23b geringer. Hierdurch sind sie ergonomischer für den Beifahrer bedienbar, solange dieser noch nicht in den Pkw 10 eingestiegen ist. Die in Figur 1 dargestellten Schaltflächen 21, 22 sind innerhalb der Anzeigeeinrichtung 3 als ortsveränderte Schaltflächen 21', 22' an den oberen Rand der Anzeigeeinrichtung 3 gewandert, sodass sie für den an der Fahrertür 23a stehenden Fahrer ergonomischer erreichbar sind. Zusätzliche Schaltflächen 16', 17' auf dem Touchscreen 33 in der Mittelkonsole 32 veranschaulichen die Erscheinung des Touchscreens 33 während eines hochautomatisierten Fahrbetriebes, in welchem die Schaltflächen 16, 17 im Multifunktionslenkrad 15 vom Anwender nicht besonders ergonomisch bedient werden können.

Figur 3 zeigt eine schematische Darstellung eines elektronischen Steuergerätes 24 als Ausführungsbeispiel einer erfindungsgemäßen Anordnung. Das elektronische Steuergerät 24 weist einen Busteilnehmer als Signaleingang 25 zur Entgegennahme von Signalen repräsentierend eine Veränderung eines Betriebszustandes eines Fortbewegungsmittels auf. Der Signaleingang 25 ist informationstechnisch mit einem programmierbaren Prozessor 26 als Auswerteeinrichtung verbunden. Sofern der programmierbare Prozessor 26 aus den erhaltenen Signalen ermittelt, dass sich ein vordefinierter Betriebszustand eingestellt hat, veranlasst er über den informationstechnisch angebundenen Signalausgang 27 (optional ebenfalls mit einem Busteilnehmer ausgestattet) eine Veränderung einer auf einer Anzeigeeinheit des Fortbewegungsmittels dargestellten Schaltfläche. Hierbei wird die Schaltfläche von einer ersten Position zu einer zweiten Position innerhalb des Fortbewegungsmittels verbracht, um die fortwährende Ergonomie in erfindungsgemäßer Weise zu gewährleisten.

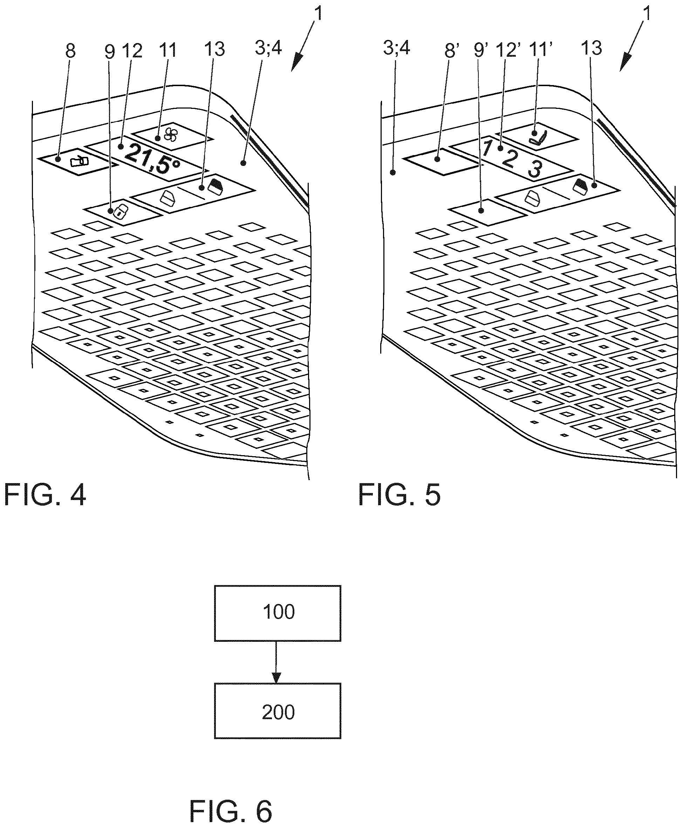

Figur 4 zeigt eine Seitenansicht eines erfindungsgemäß verwendbaren Türgriffs 1, in dessen oberer Hälfte eine Anzeigeeinrichtung 3 in einer berührungsempfindlichen Oberfläche 4 versehen ist. Unterhalb der Anzeigeeinrichtung 3 ist ein Lautsprechergitter 7 angeordnet. Auf der Anzeigeeinrichtung 3 werden Schaltflächen 8, 9, 11, 12, 13 zur Einflussnahme auf einen Verriegelungszustand des Fortbewegungsmittels, eine Solltemperatur, eine Lüfterstärke sowie eine Position einer Seitenscheibe angezeigt. Die dargestellten Schaltflächen 8, 9, 11, 12, 13 werden stets bei geschlossener Tür angezeigt.

Figur 5 zeigt das in Figur 4 dargestellte Ausführungsbeispiel in seiner Erscheinungsform bei geöffneter Tür. Da bereits vor dem Besteigen des Fortbewegungsmittels eine Anpassung der Sitzposition besonders wichtig für die Ergonomie der Bedienung des Fortbewegungsmittels ist, wird anstatt der Schaltfläche 12 (Figur 4) eine modifizierte Schaltfläche 12' dargestellt, mittels welcher gespeicherte Sitzeinstellungen abgerufen werden können. Anstatt der Schaltfläche 11 wird an derselben Position eine geänderte Schaltfläche 11' angezeigt. Mit dieser kann bereits vor dem Besteigen des Fortbewegungsmittels individueller Einfluss auf eine Sitzposition des Fortbewegungsmittels genommen werden, ohne hierzu die weniger ergonomisch an einer Einfassung der Sitzfläche angeordneten (nicht dargestellten) Bedienelemente zu verwenden. Die doppelte Schaltfläche 13 zur Ansteuerung des Fensterhebers wird unverändert dargestellt. Da die Verriegelung des Fortbewegungsmittels bei geöffneter Tür nicht möglich ist, werden die Schaltflächen 8, 9 durch neutrale Anzeigeelemente 8', 9' ersetzt.

Figur 6 zeigt ein Flussdiagramm veranschaulichend Schritte eines Ausführungsbeispiels eines erfindungsgemäßen Verfahrens zur Unterstützung eines Anwenders eines Fortbewegungsmittels. In Schritt 100 wird eine Veränderung eines Betriebszustandes des Fortbewegungsmittels ermittelt. Beispielsweise wird ein Signal durch einen Mikroschalter im Türbereich erzeugt, durch welches das Öffnen einer Fahrertür erkannt wird. Im Ansprechen darauf wird in Schritt 200 eine Position einer Schaltfläche zur Bedienung einer Sitzeinstellung verändert.

### Bezugszeichenliste

- 1: Türgriff
- 2: Griffstück
- 3: Anzeigeeinrichtung
- 4: Berührungsempfindliche Oberfläche
- 7: Lautsprechergitter
- 8, 8', 9, 9': Schaltflächen
- 10: Pkw
- 11, 11', 12, 12', 13: Schaltflächen
- 15: Multifunktionslenkrad
- 16, 16', 17, 17': Schaltflächen
- 18: Anzeigeeinrichtung
- 19, 19', 20, 20', 21, 21', 22, 22': Schaltflächen
- 23a: Fahrertür
- 23b: Beifahrertür
- 24: Elektronisches Steuergerät
- 25: Signaleingang
- 26: Programmierbarer Prozessor
- 27: Signalausgang
- 100,200: Verfahrensschritte

## Patentansprüche

1. Verfahren zur Unterstützung eines Anwenders eines Fortbewegungsmittels (10) umfassend die Schritte:
- Ermitteln (100) einer Veränderung eines Betriebszustandes des Fortbewegungsmittels (10) und im Ansprechen darauf,
- Anzeigen (200) einer Schaltfläche (8, 9, 11, 12, 13, 16, 17, 19, 20, 21, 22) zur Bedienung einer Funktion des Fortbewegungsmittels (10) an einer neuen Position, **dadurch gekennzeichnet, dass** sich die Position der Schaltfläche (8, 9, 11, 12, 13, 16, 17, 19, 20, 21, 22)
- von einem Lenkrad (15) zu einer Türinnenfläche und/oder zu einer Mittelkonsole, und/oder
- von einem Kombiinstrument und/oder einem zentralen Informationsdisplay (18) zu der Türinnenfläche und/oder zu der Mittelkonsole (32) verändert.

2. Anordnung zur Unterstützung eines Anwenders eines Fortbewegungsmittels (10) umfassend:
- einen Signaleingang (25),
- eine Auswerteeinheit (26), und
- einen Signalausgang (27),
wobei die Auswerteeinheit (26) eingerichtet ist,
- über den Signaleingang (25) eine Veränderung eines Betriebszustandes des Fortbewegungsmittels (10) zu ermitteln und im Ansprechen darauf,
- über den Signalausgang eine Schaltfläche (8, 9, 11, 12, 13, 16, 17, 19, 20, 21, 22) zur Bedienung einer Funktion des Fortbewegungsmittels (10) an einer neuen Position anzuzeigen, **dadurch gekennzeichnet, dass** sich die Position der Schaltfläche (8, 9, 11, 12, 13, 16, 17, 19, 20, 21, 22)
- von einem Lenkrad (15) zu einer Türinnenfläche und/oder zu einer Mittelkonsole, und/oder
- von einem Kombiinstrument und/oder einem zentralen Informationsdisplay (18) zu der Türinnenfläche und/oder zu der Mittelkonsole (32) verändert.

3. Verfahren nach Anspruch 1 oder Anordnung nach Anspruch 2, wobei die Veränderung des Betriebszustandes durch einen Wechsel
- eines Türöffnungszustandes und/oder
- einer Sitzbelegung und/oder
- von Fahrt zu Stillstand des Fortbewegungsmittels (10) oder andersherum und/oder
- von automatischer Führung zu manueller Führung des Fortbewegungsmittels (10) oder andersherum
gekennzeichnet ist.

4. Verfahren nach einem der Ansprüche 1 oder 3 oder Anordnung nach einem der Ansprüche 2 oder 3, wobei die Position der Schaltfläche (8, 9, 11, 12, 13, 16, 17, 19, 20, 21, 22) im Ansprechen auf das Öffnen einer Tür (23a, 23b) des Fortbewegungsmittels (10) erhöht wird.

5. Verfahren nach einem der Ansprüche 1, 3 oder 4 oder Anordnung nach einem der Ansprüche 2 bis 4, wobei die Funktion
- eine Einstellung einer Sitzgelegenheit und/oder eines Lenkhandrades (15) und/oder
- eine Türentriegelung und/oder
- einen Fensterhebemotor
betrifft.

6. Fortbewegungsmittel umfassend
- eine Anzeigeeinrichtung (3, 18) und
- eine Anordnung nach einem der vorstehenden Ansprüche 2 bis 5.

## Claims

1. Method for assisting a user of a means of transportation (10) comprising the steps of:
- determining (100) a change of an operating state of the means of transportation (10) and in response thereto,
- displaying (200) a control button (8, 9, 11, 12, 13, 16, 17, 19, 20, 21, 22) for operating a function of the means of transportation (10) at a new position, **characterized in that** the position of the control button (8, 9, 11, 12, 13, 16, 17, 19, 20, 21, 22) changes
- from a steering wheel (15) to a door's inner surface and/or to a central console, and/or
- from a combined instrument and/or a central information display (18) to the door's inner surface and/or to the central console (32).

2. Assembly for assisting a user of a means of transportation (10) comprising:
- a signal input (25),
- an analysis unit (26), and
- a signal output (27),
wherein the analysis unit (26) is arranged
- to determine a change of an operating state of the means of transportation (10) via the signal input (25) and in response thereto,
- to display a control button (8, 9, 11, 12, 13, 16, 17, 19, 20, 21, 22) for operating a function of the means of transportation (10) at a new position via the signal output, **characterized in that** the position of the control button (8, 9, 11, 12, 13, 16, 17, 19, 20, 21, 22) changes
- from a steering wheel (15) to a door's inner surface and/or to a central console, and/or
- from a combined instrument and/or a central information display (18) to the door's inner surface and/or to the central console (32).

3. Method according to Claim 1 or assembly according to Claim 2, wherein the change in the operating state is **characterized by** a change
- of a door opening state and/or
- a seat occupancy and/or
- from driving to the standstill of the means of transportation (10) or vice-versa and/or
- from automatic control to manual control of the means of transportation (10) or vice-versa.

4. Method according to either of Claims 1 and 3 or assembly according to either of Claims 2 and 3, wherein the position of the control button (8, 9, 11, 12, 13, 16, 17, 19, 20, 21, 22) is raised in response to the opening of a door (23a, 23b) of the means of transportation (10).

5. Method according to one of Claims 1, 3 or 4 or assembly according to one of Claims 2 to 4, wherein the function concerns
- adjusting the seating and/or a steering wheel (15) and/or
- door unlocking and/or
- a window lifter motor.

6. Means of transportation comprising
- a display device (3, 18) and
- an assembly according to one of preceding Claims 2 to 5.

## Revendications

1. Procédé d'assistance d'un utilisateur d'un moyen de transport (10), comprenant les étapes suivantes :
- détermination (100) d'une modification d'un état opérationnel du moyen de transport (10) et, en réaction à celle-ci,
- affichage (200) d'un bouton (8, 9, 11, 12, 13, 16, 17, 19, 20, 21, 22) pour commander une fonction du moyen de transport (10) à une nouvelle position, **caractérisé en ce que** la position du bouton (8, 9, 11, 12, 13, 16, 17, 19, 20, 21, 22) change
- d'un volant de direction (15) vers une surface intérieure de portière et/ou vers une console centrale, et/ou
- d'un instrument combiné et/ou d'un afficheur d'informations central (18) vers la surface intérieure de portière et/ou vers la console centrale (32).

2. Arrangement pour assister un utilisateur d'un moyen de transport (10), comprenant :
- une entrée de signal (25),
- une unité d'interprétation (26), et
- une sortie de signal (27),
l'unité d'interprétation (26) étant conçue pour
- déterminer une modification d'un état opérationnel du moyen de transport (10) par le biais de l'entrée de signal (25) et, en réaction à celle-ci,
- par le biais de la sortie de signal, afficher un bouton (8, 9, 11, 12, 13, 16, 17, 19, 20, 21, 22) pour commander une fonction du moyen de transport (10) à une nouvelle position, **caractérisé en ce que** la position du bouton (8, 9, 11, 12, 13, 16, 17, 19, 20, 21, 22) change
- d'un volant de direction (15) vers une surface intérieure de portière et/ou vers une console centrale, et/ou
- d'un instrument combiné et/ou d'un afficheur d'informations central (18) vers la surface intérieure de portière et/ou vers la console centrale (32).

3. Procédé selon la revendication 1 ou arrangement selon la revendication 2, la modification de l'état opérationnel étant **caractérisée par** un changement
- d'un état d'ouverture de portière et/ou
- d'une occupation de siège et/ou
- du déplacement à l'immobilisation du moyen de transport (10) ou inversement et/ou
- du guidage automatique au guidage manuel du moyen de transport (10) ou inversement.

4. Procédé selon l'une des revendications 1 ou 3 ou arrangement selon l'une des revendications 2 ou 3, la position du bouton (8, 9, 11, 12, 13, 16, 17, 19, 20, 21, 22) étant élevée en réaction à une ouverture d'une portière (23a, 23b) du moyen de transport (10).

5. Procédé selon l'une des revendications 1, 3 ou 4 ou arrangement selon l'une des revendications 2 à 4, la fonction concernant
- un réglage d'une assise et/ou d'un volant de direction manuel (15) et/ou
- d'un déverrouillage des portières et/ou
- d'un moteur de lève-vitres.

6. Moyen de transport, comprenant
- un dispositif d'affichage (3, 18) et
- un arrangement selon l'une des revendications précédentes 2 à 5.
